# EUROPÄISCHE PATENTSCHRIFT

(11) **EP 2 157 144 B1**
(45) Veröffentlichungstag und Bekanntmachung des Hinweises auf die Patenterteilung: **30.11.2011**
(21) Anmeldenummer: 09010590.9
(22) Anmeldetag: 18.08.2009
(51) Int. Cl.: C09G 3/00

(54) **Sprühbares Heisswachs**
Sprayable hot wax
Cire chaude pulvérisable

(30) Priorität: 18.08.2008 CH 13102008
(43) Veröffentlichungstag der Anmeldung: 24.02.2010
(73) Patentinhaber: Toko-Swix Sport AG, 9450 Altstätten (CH)
(72) Erfinder: Raunjak, Udo, 9494 Kriessern (CH)
(74) Vertreter: Groner, Manfred

(56) Entgegenhaltungen:
- WO-A1-03/033608
- WO-A1-2006/008066
- DE-A1- 3 700 043
- US-A- 4 717 601

## Beschreibung

### TECHNISCHES GEBIET

Die vorliegende Erfindung bezieht sich auf ein Heisswachs nach dem Oberbegriff des Anspruchs 1.

### STAND DER TECHNIK

Bekannt sind flüssige, pastöse und feste Skiwachse die entweder direkt oder beispielsweise mittels Spray, Pinsel oder Schwammapplikatoren auf die Lauffläche eines Skis, Snowboards oder sonstigen Wintersportgerätes mit Lauffläche(n) aufgetragen werden. WO2006/008066A1 zeigt ein Steigwachs, das in flüssiger, insbesondere sprühbarer Zusammensetzung auf die Laufflächen von Langlaufskiern aufgetragen wird.

Unter dem Begriff "Skiwachse" sind hierin ausschliesslich Gleitwachse - im Gegensatz zu "Steigwachsen" - zu verstehen, also Skiwachse, die das Benetzen des Kunststoffbelages der Lauf- oder Gleitfläche eines Wintersportgerätes mit Schmelzwasser, welches durch die Reibung und den Druck der Gleitfläche auf den Schnee entsteht, weitgehend verhindern und so die Gleitfähigkeit der Laufflächen solcher Wintersportgeräte auf Schnee verbessern. Dabei kann in Abhängigkeit zur Schneequalität, Schneestruktur und Schneetemperatur die Zusammensetzung der Skiwachse variieren. Dies gilt für die im Stand der Technik bekannten Skiwachse ebenso wie für die erfindungsgemässen Skiwachse.

Skiwachse gibt es als Heisswachs und Kaltwachs. Heisswachs ist typischerweise in Stangen erhältlich und wird mit geringer Hitze, zum Beispiel mit Hilfe eines Bügeleisens, flüssig gemacht und in den Belag eingearbeitet. Kaltwachs ist als Flüssigwachs zum Sprühen oder Auftragen und als Hartwachs zum Abreiben auf den Belag erhältlich. Der Heisswachsauftrag ist deutlich länger haltbar als der Kaltwachsauftrag und wird daher vor allem im Rennsport routinemässig angewandt.

Unterschieden wird Skiwachs gewöhnlich nach der Härte und dem Anteil an Fluor. Weiche Wachse schmelzen bei geringeren Temperaturen (ca. 120°C) als harte Wachse (ca. 150°C). Weil die Schneekristalle nach Alter und Temperatur unterschiedlich geformt sind, muss die Härte des verwendeten Wachses der Beschaffenheit des Schnees und dessen Temperatur entsprechend gewählt werden. Weiche Wachse kommen tendenziell bei altem Schnee (also runden Schneekörnern) und relativ hoher Aussen- und Schneetemperatur zum Einsatz, harte Wachse hingegen bei neuem Schnee (also lockeren Schneekristallen) und niedriger Temperatur.

Wachse mit hohem Fluoranteil gleiten gegenüber Wachsen mit geringem Fluoranteil in der Regel besser, haften besser am Kunststoffbelag der Lauffläche und weisen Schmutz besser ab. Gleichzeitig steigt mit dem Fluoranteil aber auch der Preis. WO03/033608A1 offenbart ein solches Wachs mit einer Komposition aus Parafin und Fluorpolymer Mikropulver.

Im Sportfachhandel wird in der Regel nicht von Hand gewachst, sondern mit einer Maschine. Die Maschine fräst oft gleichzeitig eine Struktur in den Belag ein, die das Schmelzwasser unter dem Sportgerät nach aussen ableitet und die Gleiteigenschaften des Sportgeräts noch weiter verbessert.

US4717601A offenbart eine Vorrichtung zum Wachsen der Lauffläche von Skis durch Aufsprayen eines Gemischs aus Wachs und einem flüchtigen Lösungsmittel.

Nachteilig bei den bekannten, lösungsmittelhaltigen Skiwachsen, vor allem jenen in flüssiger oder pastöser Form, ist jedoch, dass das auf die Gleitfläche aufgetragene Skiwachs zuerst trocknen muss, bevor es zur Erzielung einer maximalen Gleitfähigkeit weiter behandelt, insbesondere geglättet und endgetrocknet werden kann. Das heisst, dass das auf die Lauffläche eines Skis aufgetragene flüssige, pastöse oder feste Skiwachs nicht direkt nach der Applikation gebügelt oder mit Infrarottrockner oder Thermobox behandelt werden kann.

### KURZE BESCHREIBUNG DER ERFINDUNG

Dem gegenüber ist es die Aufgabe der vorliegenden Erfindung, ein Produkt bereit zu stellen, mit dem es möglich wird, einen gleichmässigen Auftrag von Heisswachs mittels Aerosol auf die Gleitflächen zu erzielen, wobei der dabei entstehende Heisswachsbelag direkt und innerhalb von wenigen Sekunden, typischerweise innerhalb von 10 bis 60 Sekunden, mittels üblicher Methoden wie z.B. Infrarot, Bügeleisen oder Thermobox weiterverarbeitet werden kann. Möglich wird dies dadurch, dass das Heisswachs nach dem Aufsprühen sehr rasch in Pulverform auf der Gleitfläche vorliegt, da die leichtflüchtigen, organischen Lösungsmittel nach dem Sprühvorgang sehr schnell verdampfen.

Die Lösungsmittel der Heisswachsmischung werden der vorgesehenen Bearbeitungstemperatur entsprechend angepasst, sodass auch bei Verwendung des Heisswachssprays im Freien bei niedrigen Aussentemperaturen ein ausreichend rasches Abdampfen der Lösungsmittel erfolgen kann.

Bisher war es nicht möglich, solche Heisswachse in Aerosolform bereit zu stellen und mittels Sprühpumpe oder Treibgas-Spray zu applizieren, um sie unmittelbar danach sofort einzubügeln bzw. mittels Infrarottrockner zu behandeln.

### DETAILLIERTE BESCHREIBUNG DER ERFINDUNG

Die vorliegende Erfindung liefert hingegen eine geeignete Lösung für eine Sprühapplikation von Heisswachsen. Ermöglicht wird dies durch das in Anspruch 1 definierte Heisswachs und die weiteren Ausführungsformen der Erfindung gemäss den in den abhängigen Ansprüchen beschriebenen Merkmalen. Ein erfindungsgemässes Verfahren zur Verbesserung der Gleiteigenschaften von Laufflächen von Wintersportgeräten ist in Anspruch 6 und ein erfindungsgemässer Heisswachsspray in Anspruch 10 definiert.

Als Lösungsmittel kommen insbesondere fettlösende Lösungsmittel wie Methylether, Dimethylether, Chloroform, Tetrachlorkohlenstoff, Methylal, Propan, Butan, Pentan, Hexan, Cyclohexan, Heptan, Oktan, Nonan, Dekan, Ethanol, Benzin und benzinartige Lösungsmittel in Frage.

In einer Ausführungsform der Erfindung umfasst die Lösungsmittelmischung wenigstens ein höher siedendes Lösungsmittel, insbesondere aus der Gruppe Pentan, Hexan, Cyclohexan, Heptan, Oktan, Nonan, Dekan zusammen mit wenigstens einem tiefer siedenden Lösungsmittel, insbesondere aus der Gruppe Propan, Butan, Isobutan, oder einem Gemisch solcher tiefer siedenden Lösungsmittel, um die erwünschte Sprühbarkeit mit Hilfe eines solchen tiefer siedenden Lösungsmittels als Treibmittel in einer Sprühdose zu erzielen.

In diesem Zusammenhang sind unter "höher siedenden" Lösungsmitteln solche zu verstehen, deren Siedepunkt im Bereich der Raumtemperatur (ca. 20°C) oder darüber liegt, und unter "tiefer siedenden" Lösungsmitteln solche, deren Siedepunkt unterhalb von 20°C, vorzugsweise unterhalb von 0°C liegt.

Für die meisten Anwendungen kommen Heisswachsmischungen zum Einsatz, die im Wesentlichen aus folgenden Komponenten zusammengesetzt sind:
a) einer Treibgaskomponente, vorzugsweise ausgewählt aus Propan, Butan, Pentan, Methylether, Dimethylether, Chloroform oder einer Mischung davon, in einem Anteil von 10-60 Gew. %, bezogen auf die einsatzfertige Heisswachsmischung; sowie
b) einem oder mehreren Wirkstoffen aus der Gruppe der Paraffinwachse, mikrokristallinen Wachse, fluorierten Wachse, teilfluorierten Wachse, und/oder Polyethylenwachse, in einem Anteil von insgesamt 10-80 Gew.%; sowie
c) einem Lösungsmittel oder Lösungsmittelgemisch aus der Gruppe Pentan, Hexan, Cyclohexan, Heptan, Oktan, Nonan, Dekan, Ethanol, Benzin und benzinartige Lösungsmittel, in einem Anteil von 1-80 Gew.%

Als Additive können z.B. Farbpigmente und/oder Substanzen zugesetzt werden, die entweder die Abrasionsfestigkeit des aufgetragenen Skiwachses erhöhen und/oder solche, die in der Lage sind, eine durch Reibung gegebenenfalls entstehende elektrostatische Aufladung des Heisswachsfilms zu verhindern, welche sonst zu einem Anhaften des durch den Anpressdruck entstehenden Schmelzwasserfilms an der Lauffläche führen könnte. Geeignete Additive wie z.B. Graphit-, Aluminium- oder Kupferpulver sind im Stand der Technik bekannt.

### Beispiel 1: Typische Zusammensetzung einer sprühbaren Heisswachsmischung; Angaben in Gew.% bezogen auf die gebrauchsfertige Endmschung.

- 10-80 % Paraffinwachsgemisch,
- 1-10 % fluorierte Wachse
- 1-80 % Benzin (Lösungsmittel)
- 10-60 % Propan (Treibmittel)

Diese Heisswachsmischung ist für viele Anwendungsfälle geeignet und lässt sich mit handelsüblichen Sprühdosensystemen gleichmässig auf die Gleitflächen von Wintersportgeräten aufsprühen und sofort, d.h. nach wenigen Sekunden, weiter verarbeiten. Wo erforderlich oder gewünscht können anschliessend noch weitere Finishing-Substanzen oder Wachse aufgebracht werden.

## Patentansprüche

1. Heisswachs, **dadurch gekennzeichnet, dass** es in Form einer sprühbaren, aerosolbildenden Mischung aus Wachskomponenten, und Lösungsmitteln vorliegt, und als wesentliche qualitäts- und wirkungsbestimmende Inhaltsstoffe folgende Komponenten enthält:
a) 10-60 Gew.%, bezogen auf die einsatzfertige Heisswachsmischung, an Treibgasmittel aus der Gruppe Propan, Butan, Pentan, Methylether, Dimethylether, Chloroform, oder einer Mischung aus zwei oder mehreren dieser Komponenten; sowie
b) 10-80 Gew.% an Paraffinwachsen, mikrokristallinen Wachsen, fluorierten Wachsen, teilfluorierten Wachsen, Polyethylenwachsen, oder einer Mischung aus zwei oder mehreren dieser Komponenten; sowie
c) 1-80 Gew.% an Lösungsmittel aus der Gruppe Pentan, Hexan, Cyclohexan, Heptan, Oktan, Nonan, Dekan, Ethanol, Benzin und benzinartigen Lösungsmitteln, oder einer Mischung aus zwei oder mehreren dieser

2. Heisswachs nach Anspruch 1, **dadurch gekennzeichnet, dass** es aus
10-80 Gew. % Paraffinwachsgemisch,
1-10 Gew. % fluorierte Wachse
1-80 Gew.% Benzin (Lösungsmittel)
10-60 Gew. % Propan (Treibmittel)
besteht.

3. Heisswachs nach Anspruch 1 oder 2, **dadurch gekennzeichnet, dass** es 0-5 Gew.% an Additiven enthält.

4. Heisswachs nach Anspruch 3, **dadurch gekennzeichnet, dass** es als Additive Farbpigmente und/oder Substanzen enthält, die entweder die Abrasionsfestigkeit des aufgetragenen Skiwachses erhöhen und/oder solche, die in der Lage sind, eine durch Reibung entstehende elektrostatische Aufladung des Heisswachsfilms zu verhindern.

5. Heisswachs nach Anspruch 3 oder 4, **dadurch gekennzeichnet, dass** es als Additiv Graphit-, Aluminium- oder Kupferpulver enthält. werden kann.

6. Verfahren zur Verbesserung der Gleiteigenschaften von Laufflächen von Wintersportgeräten, **dadurch gekennzeichnet, dass** ein in den Ansprüchen 1 bis 5 definiertes Heisswachs in Aerosolform auf eine Lauffläche eines Wintersportgeräts aufgesprüht wird und eine Heisswachsschicht in Pulverform ausbildet.

7. Verfahren nach Anspruch 6, **dadurch gekennzeichnet, dass** der dabei in Pulverform entstehende Heisswachsbelag einer thermischen Weiterverarbeitung unterzogen wird.

8. Verfahren nach Anspruch 67, **dadurch gekennzeichnet, dass** die thermische Weiterverarbeitung wenigstens einen der Schritte aus der Gruppe Infrarotbestrahlung, Bügeln und Behandlung mittels Thermobox umfasst.

9. Verfahren nach Anspruch 7 oder 8, **dadurch gekennzeichnet, dass** die thermische Weiterverarbeitung innerhalb von 10 bis 60 Sekunden nach dem Aufsprühen vorgenommen wird oder werden kann.

10. Heisswachsspray bestehend aus einer Sprühdose und einer Füllung aus einem aerosolbildenden, sprühbaren Heisswachs, **dadurch gekennzeichnet, dass** das Heisswachs aus einer in den Ansprüchen 1 bis 45 definierten Mischung aus Wachskomponenten, Lösungsmitteln und optionalen Additiven besteht.

## Claims

1. Hot wax, **characterized in that** it is in the form of a sprayable, aerosol-forming mixture of wax components and solvents, and comprises the following components as essential quality- and effect-determining ingredients:
a) 10-60% by weight, based on the ready-to-use hot wax mixture, of propellant from the group propane, butane, pentane, methyl ether, dimethyl ether, chloroform, or a mixture of two or more of these components; and
b) 10-80% by weight of paraffin waxes, microcrystalline waxes, fluorinated waxes, partially fluorinated waxes, polyethylene waxes, or a mixture of two or more of these components; and
c) 1-80% by weight of solvent from the group pentane, hexane, cyclohexane, heptane, octane, nonane, decane, ethanol, benzine or benzine-like solvents, or a mixture of two or more of these.

2. Hot wax according to Claim 1, **characterized in that** it consists of
10-80% by weight of paraffin wax mixture,
1-10% by weight of fluorinated waxes,
1-80% by weight of benzine (solvent),
10-60% by weight of propane (propellant).

3. Hot.wax according to Claim 1 or 2, **characterized in that** it comprises 0-5% by weight of additives.

4. Hot wax according to Claim 3, **characterized in that** it comprises, as additives, coloured pigments and/or substances which either increase the abrasion resistance of the applied ski wax and/or those which are able to prevent an electrostatic charging of the hot wax film that is formed as a result of friction.

5. Hot wax according to Claim 3 or 4, **characterized in that** it comprises graphite powder, aluminium powder or copper powder as additive.

6. Method for improving the slide properties of running surfaces of winter sports equipment, **characterized in that** a hot wax defined in Claims 1 to 5 is sprayed, in aerosol form; onto a running surface of winter sports equipment and a hot wax layer in powder form is formed.

7. Method according to Claim 6, **characterized in that** the hot wax coating which is thereby formed in powder form is subjected to a thermal further processing.

8. Method according to Claim 7, **characterized in that** the thermal further processing involves at least one of the steps from the group infrared irradiation, ironing and treatment by means of thermobox.

9. Method according to Claim 7 or 8, **characterized in that** the thermal further processing is or can be undertaken over the course of 10 to 60 seconds after the spraying on.

10. Hot wax spray consisting of a spray can and a filling composed of an aerosol-forming, sprayable hot wax, **characterized in that** the hot wax consist of a mixture, defined in Claims 1 to 5, of wax components, solvents and optional additives.

## Revendications

1. Cire chaude, **caractérisée en ce qu'**elle se trouve sous forme d'un mélange pulvérisable, formant un aérosol, constitué de composants de cire et de solvants et contient, comme constituants déterminant sensiblement la qualité et l'action, les composants suivants :
a) 10-60% en poids, par rapport au mélange de cire chaude prêt à l'emploi, de gaz propulseur du groupe formé par le propane, le butane, le pentane, le méthyléther, le diméthyléther, le chloroforme, ou un mélange de deux ou de plus de deux de ces composants ; ainsi que
b) 10-80% en poids de cires de paraffine, de cires microcristallines, de cires fluorées, de cires partiellement fluorées, de cires de polyéthylène ou d'un mélange de deux de ces composants ou plus ; ainsi que
c) 1-80% en poids de solvant du groupe formé par le pentane, l'hexane, le cyclohexane, l'heptane, l'octane, le nonane, le décane, l'éthanol, l'essence et les solvants de type essence ou un mélange de deux de ceux-ci ou plus.

2. Cire chaude selon la revendication 1, **caractérisée en ce qu'**elle est constituée par
- 10-80% en poids de mélange de cires de paraffine,
- 1-10% en poids de cires fluorées
- 1-80% en poids d'essence (solvant)
- 10-60% en poids de propane (agent propulseur).

3. Cire chaude selon la revendication 1 ou 2, **caractérisée en ce qu'**elle contient 0-5% en poids d'additifs.

4. Cire chaude selon la revendication 3, **caractérisée en ce qu'**elle contient comme additifs des pigments colorés et/ou des substances qui augmentent soit la résistance à l'abrasion de la cire à ski appliquée et/ou qui sont en mesure d'empêcher une charge électrostatique formée par frottement du film de cire chaude.

5. Cire chaude selon la revendication 3 ou 4, **caractérisée en ce qu'**elle contient, comme additif, de la poudre de graphite, d'aluminium ou de cuivre.

6. Procédé pour améliorer les propriétés de glissement de surfaces de glissement d'engins de sport d'hiver, **caractérisé en ce qu'**une cire chaude définie dans les revendications 1 à 5 est pulvérisée sous forme d'aérosol sur une surface de glissement d'un engin de sport d'hiver et forme une couche de cire chaude sous forme de poudre.

7. Procédé selon la revendication 6, **caractérisé en ce que** le revêtement de cire chaude formé sous forme de poudre est soumis à un traitement thermique ultérieur.

8. Procédé selon la revendication 7, **caractérisé en ce que** le traitement thermique ultérieur comprend au moins une des étapes du groupe irradiation aux infrarouges, repassage et traitement au moyen d'un Thermobox.

9. Procédé selon la revendication 7 ou 8, **caractérisé en ce que** le traitement thermique ultérieur est réalisé ou peut être réalisé 10 à 60 secondes après la pulvérisation.

10. Spray de cire chaude constitué par une bombe de pulvérisation et. une charge d'une cire chaude pulvérisable formant un aérosol, **caractérisé en ce que** la cire chaude est constituée par un mélange défini dans les revendications 1 à 5 de composants de cire, de solvants et d'additifs éventuels.
